# EUROPÄISCHE PATENTSCHRIFT

(11) **EP 2 054 266 B1**
(45) Veröffentlichungstag und Bekanntmachung des Hinweises auf die Patenterteilung: **10.10.2012**
(21) Anmeldenummer: 07846978.0
(22) Anmeldetag: 04.12.2007
(51) Int. Cl.: B60N 2/50

(54) **FAHRZEUGSITZ, INSBESONDERE NUTZFAHRZEUGSITZ**
VEHICLE SEAT, PARTICULARLY COMMERCIAL VEHICLE SEAT
SIÈGE DE VÉHICULE, EN PARTICULIER SIÈGE DE VÉHICULE UTILITAIRE

(30) Priorität: 13.12.2006 DE 102006059088
(43) Veröffentlichungstag der Anmeldung: 06.05.2009
(73) Patentinhaber: KEIPER GmbH & Co. KG, 67657 Kaiserslautern (DE)
(72) Erfinder: WEBER, Thomas, 67659 Kaiserslautern (DE); RUESS, Georg, 66851 Oberarnbach (DE); KLEIN, Harald, 66909 Matzenbach (DE); NISSEN, Rüdiger, 66629 Freisen (DE)
(74) Vertreter: Hemmelmann, Klaus
(86) Internationale Anmeldenummer: PCT/EP2007/010496
(87) Internationale Veröffentlichungsnummer: WO 2008/071322

(56) Entgegenhaltungen:
- DE-A1- 3 717 703
- DE-A1-102004 038 507
- DE-C- 830 270
- JP-A- 8 296 639

## Beschreibung

Die Erfindung betrifft einen Fahrzeugsitz mit den Merkmalen des Oberbegriffs des Anspruches 1.

Ein Fahrzeugsitz dieser Art ist aus der DE 37 17 703 A1 bekannt. Die Schwingen sind an Querrohren angebracht, welche mittels Rollen in den als Schienen dienenden Rahmen beweglich sind. Die DE 10 2004 038 507 A1 zeigt eine Lageranordnung mit einem Rad, das an einem unteren Schenkel eines Rahmens abgestützt ist, und einem weiteren Rad, das an einem oberen Schenkel des Rahmens anliegt, wobei die Schenkel in unterschiedlichen Winkeln zur Querrichtung des Fahrzeugsitzes stehen.

Der Erfindung liegt die Aufgabe zu Grunde, einen alternativen Fahrzeugsitz der eingangs genannten Art zu schaffen. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Das an der zweiten Führung des Rahmens abgestützte Rad steht im Kraftfluss der Struktur des Fahrzeugsitzes, während das an der ersten Führung des Rahmens anliegende Gleiter dem Spielausgleich dient. Hierfür ist die erste Führung - wenigstens abschnittsweise - gegenüber der Querrichtung des Fahrzeugsitzes in einem von 0° verschiedenen Winkel geneigt ist, um sowohl ein Spiel in Querrichtung als auch in der senkrechten Richtung ausgleichen zu können. Die Spielfreistellung kann auch anstelle eines Gleiters (in Anlehnung an den Nutenstein auch als Gleitstein bezeichnet) auch mit Rädern verwirklicht werden. Der entsprechenden Begriffe sind daher weit auszulegen.

Das Gleiter ist vorzugsweise vorgespannt, beispielsweise mittels einer Vorspannung zwischen verschiedenen Lagerelementen, die vorzugsweise von einer Feder aufgebracht wird. Die Vorspannung besteht vorzugsweise zwischen der ersten Führung und einem weiteren Bauteil des Sitzunterbaus, beispielsweise einem Querrohr, das zugleich die Scheren verbinden und/oder das Rad drehbar lagern kann.

Das Rad rollt entlang der vorzugsweise profilierten zweiten Führung, welche beispielsweise an einem unteren Schenkel des Rahmens vorgesehen ist, um eine definierte Bahn zu durchlaufen. Vorzugsweise ist auf wenigstens einer Fahrzeugsitzseite das Rad in Querrichtung verschieblich, um spielunabhängig mit der zweiten Führung zusammenwirken zu können. Vorzugsweise ist die zweite Führung im Profil wenigstens abschnittsweise im gleichen Winkel wie der obere Schenkel gegenüber der Querrichtung des Fahrzeugsitzes geneigt. Damit können das Rad und das Gleiter gegeneinander vorspannt werden.

Vorzugsweise ist das Profil der zweiten Führung ein gleichschenkliges Dreieck mit dem Winkel als Basiswinkel, welches das Rad zentriert, wobei zur Vereinfachung der Herstellung durch Biegen und zum Schutz vor Beschädigungen vorzugsweise ausgerundete Ecken vorgesehen sind. Das Rad ist entsprechend als Doppelkegelrad ausgebildet, wobei es je nach Orientierung der Spitze oder gedachten Spitze des gleichschenkligen Dreiecks eine mittige Verjüngung oder Verjüngungen zu den Stirnflächen aufweist. Die Führungen können - je nach gewünschter Materialpaarung - einstückig miteinander oder jeweils einstückig mit dem Rahmen oder jeweils als gesondertes Bauteil ausgebildet sein, wobei jeweils beliebige Kombinationen möglich sind.

Die Lagervorrichtung kann sowohl an einem unteren Rahmen des Scherengestells als auch an einem oberen Rahmen vorgesehen sein, jeweils alleine oder in Kombination. Beim unteren Rahmen wird ein direkter Kraftfluss in Richtung der Fahrzeugstrukur vorzugsweise erreicht, indem das Rad möglichst genau oberhalb von Sitzschienen, die zur Längseinstellung des Fahrzeugsitzes am unteren Rahmen angebracht sind, auf dem Rahmen aufliegt.

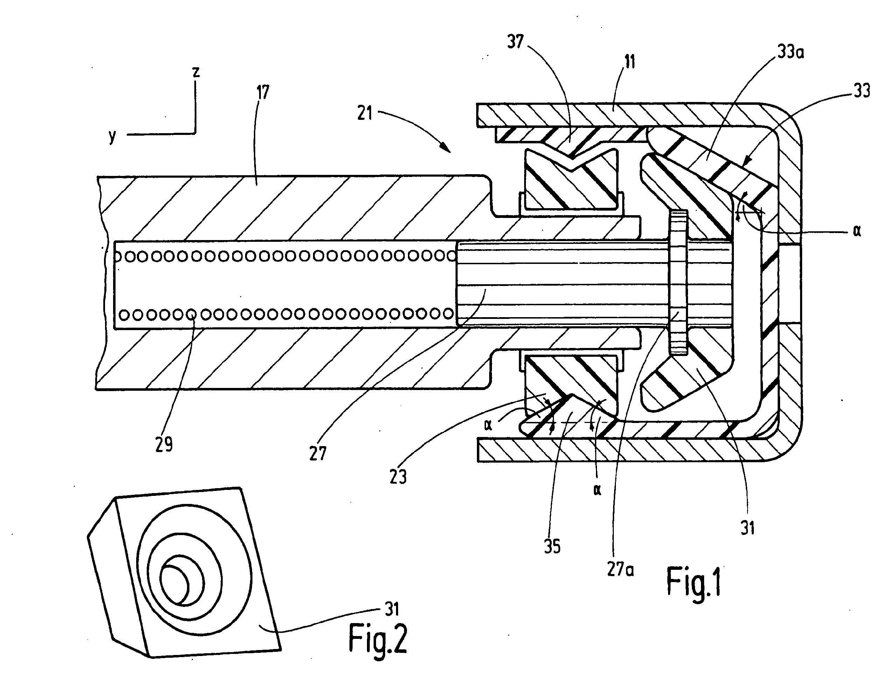

Im folgenden ist die Erfindung anhand eines in der Zeichnung dargestellten AusFührungsbeispiels mit einer Abwandlung näher erläutert. Es zeigen
- Fig. 1: einen Schnitt durch eine Lagervorrichtung,
- Fig. 2: eine perspektivische Ansicht des Gleiters, und

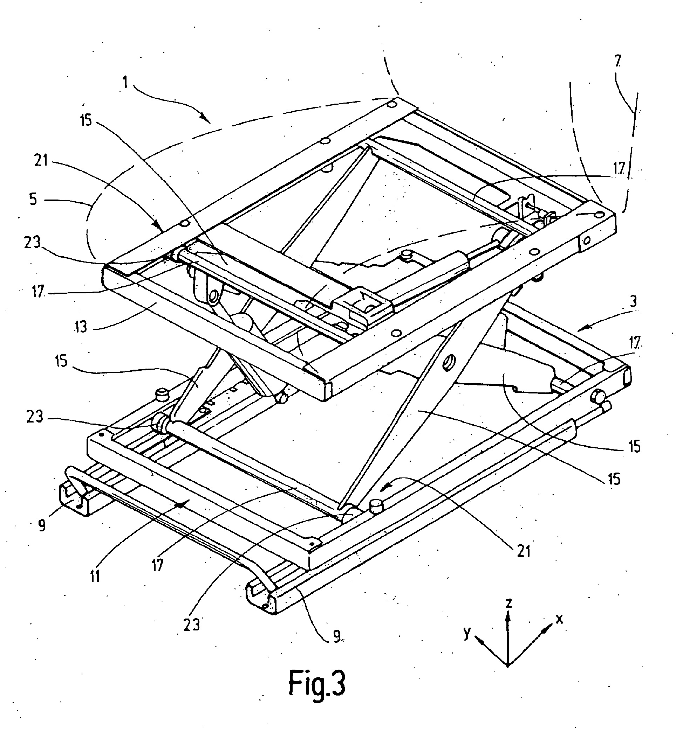

- Fig. 3: eine perspektivische Darstellung des Ausführungsbeispiels, bei der Sitzkissen und Lehne nur angedeutet sind.

Ein Fahrzeugsitz 1 eines Nutzfahrzeuges weist einen Sitzunterbau 3, ein auf dem Sitzunterbau 3 gelagertes Sitzkissen 5 und eine am Sitzunterbau 3 angebrachte Lehne 7 auf. Der Sitzunterbau 3 ist vorzugsweise längseinstellbar, indem er auf beiden Fahrzeugsitzseiten mittels je eines Paares von Sitzschienen 9 an der Fahrzeugstruktur angebracht ist. Der Sitzunterbau 3 ist auf eine nachfolgend beschriebene Weise höheneinstellbar. Die Bewegungsrichtungen deren Teile des Fahrzeugsitzes 1 bei der Höheneinstellung, die Anordnung des Fahrzeugsitzes 1 im Nutzfahrzeug und dessen gewöhnliche Fahrtrichtung definieren die verwendeten Richtungsangaben.

Der Sitzunterbau 3 ist als ein - bei Nutzfahrzeugen bekanntes - Scherengestell ausgebildet. Zwischen einem unteren Rahmen 11 und einem oberen Rahmen 13 ist auf beiden Fahrzeugsitzseiten je ein Paar gekreuzter Schwingen 15 vorgesehen. Die Schwingen 15 sind an ihren Enden jeweils durch horizontale, in Querrichtung des Fahrzeugsitzes 1 (y-Richtung, zugleich die Horizontale) verlaufende Querrohre 17 verbunden, wobei hierunter auch von der Kreisform abweichende und/oder gegebenenfalls massive Querschnitte verstanden werden sollen. Die Rahmen 11 und 13 weisen jeweils ein zum Inneren des Fahrzeugsitzes 1 hin offenes C-Profil auf.

Am unteren Rahmen 11 sind die Schwingen 15 mittels des dortigen Querrohres 17 hinten angelenkt und vorne mittels des dortigen Querrohres 17 und einer nachfolgend näher beschriebenen Lagervorrichtung 21 in Längsrichtung der Fahrzeugsitzes 1 beweglich gelagert. Am oberen Rahmen 13 sind die Schwingen 15 hinten mittels des dortigen Querrohres 17 lösbar angelenkt und vorne mittels des dortigen Querrohres 17 in Längsrichtung des Fahrzeugsitzes 1 (x-Richtung) beweglich gelagert, vorliegend mittels einer Lagervorrichtung 21 von gleicher Bauart. Die Sitzschienen 9 sind am unteren Rahmen 11 angebracht, während das Sitzkissen 5 auf der Oberseite des oberen Rahmens 13 gelagert ist. Die Sitzschienen 9 und der untere Rahmen 11 können zueinander geneigt angeordnet sein, so dass die Längseinstellung des Fahrzeugsitzes 1 und die Bewegung des Querrohres 17 in Längsrichtung des Fahrzeugsitzes 1 (x-Richtung) nicht parallel zueinander erfolgen brauchen.

Die Lagervorrichtung 21 umfasst auf jeder Fahrzeugsitzseite ein Rad 23, welches vorliegend eine gesondert ausgebildete Nabe 25 aufweist, die aber auch ein einstückig ausgebildeter Bestandteil sein kann. Mittels dieser Nabe 25 ist das Rad 23 auf dem zugeordneten Querrohr 17 drehbar gelagert ist, wofür das Querrohr 17 vorzugsweise einen Endabschnitt von geringerem Außendurchmesser besitzt. Alternativ kann auch eine hohle Lagerbuchse am Querrohr 17 angebracht, beispielsweise eingepresst, sein. Auf wenigstens einer der beiden Fahrzeugsitzseiten, vorliegend beiden, ist das Rad 23 auch in y-Richtung verschieblich. Das Rad 23 besteht vorzugsweise aus einem relativ harten Kunststoff, beispielsweise POM oder PA6.

Im Querrohr 17 (oder der Lagerbuchse) ist - begrenzt in y-Richtung verschieblich - ein Lagerbolzen 27 gelagert, dessen Profil nicht kreisrund zu sein braucht, sondern auch eckig sein kann. Der Lagerbolzen 27 steht in y-Richtung über das Querrohr 17 über. Der Lagerbolzen 27 weist dort - versetzt zu seiner außen gelegenen Stirnseite - einen Bund 27a auf, welcher die Begrenzung der Verschiebung des Lagerbolzens 27 zum Querrohr 17 hin bildet. Auf seiner innen gelegenen Stirnseite wird der Lagerbolzen 27 von einer Feder 29 in y-Richtung nach außen beaufschlagt. Die Feder 29 ist vollständig innerhalb des Querrohres 17 angeordnet und dort abgestützt, beispielsweise an einer Schraube.

Auf dem Lagerbolzen 27 sitzt zwischen der außen gelegenen Stirnseite und dem Bund 27a ein Gleiter 31. Der Gleiter 31 kann festsitzend oder - zum Toleranzausgleich - drehbar auf dem Lagerbolzen 27 gelagert sein. Der Gleiter 31 ist in x-Richtung entlang einer ersten Führung 33 verschieblich, welche am unteren Rahmen 11 (bzw. am oberen Rahmen 13) befestigt ist, beispielsweise eingeschoben und angeschraubt ist, gegebenenfalls auch einstückig damit ausgebildet ist. Die erste Führung 33 erstreckt sich mit konstantem Profil in x-Richtung vorliegend entlang des unteren Rahmens 11, an dem sie seitlich anliegt. Das Material des Gleiters 31 und der ersten Führung 33 ist so gewählt, dass ein Reibungspaar mit geringer Reibung entsteht. Beispielsweise besteht die erste Führung 33 aus POM, während der Gleiter 31 beispielsweise aus PA oder Stahl besteht.

Das Rad 23 sitzt in der senkrechten Richtung (z-Richtung) auf einer zweiten Führung 35 auf, welches am unteren Rahmen 11 (bzw. am oberen Rahmen 13) befestigt ist, beispielsweise wie die erste Führung 33, gegebenenfalls auch einstückig mit dem Rahmen 11 oder 13 ausgebildet ist, vorliegend aber einstückig mit der ersten Führung 33 ausgebildet ist. Die zweite Führung 35 liegt vorliegend unten auf einem unteren Schenkel des Rahmen 11 auf, möglichst genau oberhalb der Sitzschienen 9, um das anteilige Sitzgewicht möglichst im direkten Kraftfluss in Richtung der Fahrzeugstruktur zu leiten. Es sind verschiedene Formen der zweiten Führung 35 möglich.

Im Ausführungsbeispiel ist das Profil der zweiten Führung 35 ein gleichschenkliges Dreieck mit einem Basiswinkel α, wobei die Basis in y-Richtung verläuft, und mit ausgerundeten Ecken, wobei die gedachte Spitze zum Rad 23 weist, d.h. in z-Richtung nach oben. Die zweite Führung 35 ist also abschnittsweise mit dem Basiswinkel α gegenüber der y-Richtung geneigt. Entsprechend ist das Rad 23 als Doppelkegelrad mit mittiger Verjüngung (in der Art einer "Garnrolle") und mit - wenigstens näherungsweise - dem Basiswinkel α ausgebildet, wobei das Rad 23 von dieser Grundform aus leicht ballig ausgebildet sein kann. In abgewandelter AusFührung weist das Profil der zweiten Führung 35 vom Rad 23 weg, d.h. mit einem Basiswinkel α in z-Richtung nach unten. Entsprechend ist dann das Rad 23 als Doppelkegelrad mit Verjüngung nach außen und mit einem Basiswinkel α oder als balliges Rad ausgebildet. Der zweiten Führung 35 gegenüberliegend ist am oberen Schenkel des unteren Rahmens 11 eine Auffangleiste 37 angeordnet, deren Profil demjenigen des Lagers 35 entspricht und die das Rad 23 auffängt, wenn es jemals die zweite Führung 35 in z-Richtung nach oben verlassen sollte. Die Auffangleiste 37 kann einstückig mit der ersten Führung 33 oder gesondert davon ausgebildet sein.

Der Bereich der ersten Führung 33, an welchem der Gleiter 31 anliegen kann, bildet einen Anlageschenkel 33a der ersten Führung 33, der im Profil, d.h. in der von der y-Richtung und der z-Richtung aufgespannten Ebene, schräg zur y-Richtung verläuft, und zwar vorliegend mit dem Basiswinkel α der zweiten Führung 35, wobei auch ein anderer Winkel möglich ist. Der Gleiter 31 liegt dabei oben (+z-Richtung) an diesem Anlageschenkel 33a der ersten Führung 33 an, während er unten (-z-Richtung) von der ersten Führung 33 beabstandet ist. Die Vorspannung des Lagerbolzens 27, welcher mit seinem Bund 27a den Gleiter 31 in y-Richtung nach außen drückt, sorgt zum einen dafür, dass ein Spiel in y-Richtung ausgeglichen wird, welches beispielsweise in Hinblick auf Übermaße oder Untermaße der toleranzbehafteten Bauteile vorgesehen ist. Durch die schräge Orientierung des Anlageschenkels 33a wird ein Teil der Vorspannung auch in die z-Richtung gelenkt, um das Rad 23 und den Gleiter 31 gegeneinander vorzuspannen. Dies gleicht ein Spiel in z-Richtung aus. Der Gleiter 31 wirkt damit als Ausgleichselement für das Spiel in y-Richtung und in z-Richtung.

Am oberen Rahmen 13 ist vorliegend die gleiche Lagervorrichtung 21 vorhanden, abgesehen von der - nur unten vorhandenen - direkten Einwirkung auf die Sitzschienen 9, wobei in der vorstehenden Beschreibung anstelle des unteren Rahmens 11 entsprechend der obere Rahmen 13 zu lesen ist. Eine Bewegung der vorderen Querrohre 17 in x-Richtung, die vorzugsweise durch Anschläge begrenzt ist, und während der der Gleiter 31 entlang der ersten Führung 33 gleitet und das Rad 23 entlang der zweiten Führung 35 rollt, bewirkt eine Schwenkbewegung der Schwingen 15, welche zu einer Höheneinstellung des oberen Rahmens 13 und damit des Sitzkissens 5 führt.

### Bezugszeichenliste

- 1: Fahrzeugsitz
- 3: Sitzunterbau
- 5: Sitzkissen
- 7: Lehne
- 9: Sitzschiene
- 11: unterer Rahmen
- 13: oberer Rahmen
- 15: Schwinge
- 17: Querrohr
- 21: Lagervorrichtung
- 23: Rad
- 27: Lagerbolzen
- 27a: Bund
- 29: Feder
- 31: Gleiter
- 33: erste Führung
- 33a: Anlageschenkel
- 35: zweite Führung
- 37: Auffangleiste
- α: Basiswinkel
- x: Längsrichtung des Fahrzeugsitzes
- y: Querrichtung des Fahrzeugsitzes
- z: senkrechte Richtung

## Patentansprüche

1. Fahrzeugsitz, insbesondere Nutzfahrzeugsitz, mit einem als Scherengestell ausgebildeten Sitzunterbau (3), der gekreuzte Schwingen (15) und wenigstens einen Rahmen (11, 13) aufweist, welcher wenigstens eine der Schwingen (15) mittels einer Lagervorrichtung (21) in einer Längsrichtung (x) des Fahrzeugsitzes (1) beweglich führt, wobei die Lagervorrichtung (21) wenigstens ein Ausgleichselement, welches an einer ersten Führung (33) des Rahmens (11, 13), die wenigstens abschnittsweise in einem Winkel (α) gegenüber der Querrichtung (y) des Fahrzeugsitzes (1) geneigt ist, anliegt und entlang dieser in Längsrichtung (x) beweglich ist, und wenigstens ein drehbar gelagertes Rad (23) aufweist, welches an einer zweiten Führung (35) des Rahmens (11, 13) abgestützt ist und entlang dieser in Längsrichtung (x) rollen kann, **dadurch gekennzeichnet, dass** als Ausgleichselement ein Gleiter (31) vorgesehen ist, welcher entlang der ersten Führung (33) verschieblich ist.

2. Fahrzeugsitz nach Anspruch 1, **dadurch gekennzeichnet, dass** die zweite Führung (35) im Profil wenigstens abschnittsweise im gleichen Winkel (α) gegenüber der Querrichtung (y) des Fahrzeugsitzes (1) geneigt ist wie die erste Führung (33).

3. Fahrzeugsitz nach Anspruch 2, **dadurch gekennzeichnet, dass** das Profil der zweiten Führung (35) ein gleichschenkliges Dreieck mit dem Winkel (α) als Basiswinkel ist, insbesondere mit ausgerundeten Ecken.

4. Fahrzeugsitz nach Anspruch 3, **dadurch gekennzeichnet, dass** die Spitze oder gedachte Spitze des gleichschenkligen Dreiecks zum Rad (23) hin oder von diesem weg weist.

5. Fahrzeugsitz nach einem der vorhergehenden Ansprüche, **dadurch gekennzeichnet, dass** die Führungen (33, 35) einstückig miteinander, einstückig mit dem Rahmen (11, 13) oder als gesonderte Bauteile ausgebildet sind.

6. Fahrzeugsitz nach einem der vorhergehenden Ansprüche, **dadurch gekennzeichnet, dass** das Rad (23) als Doppelkegelrad ausgebildet ist.

7. Fahrzeugsitz nach einem der vorhergehenden Ansprüche, **dadurch gekennzeichnet, dass** das Rad (23) in Querrichtung (y) des Fahrzeugsitzes (1) verschieblich ist, insbesondere auf einem Querrohr (17) des Sitzunterbaus (3), auf welchem das Rad (23) drehbar gelagert ist.

8. Fahrzeugsitz nach einem der vorhergehenden Ansprüche, **dadurch gekennzeichnet, dass** der Gleiter (31) auf einem Lagerbolzen (27) gelagert ist, wobei der Lagerbolzen (27) und/oder der Gleiter (31) in Querrichtung (y) des Fahrzeugsitzes (1) verschieblich ist.

9. Fahrzeugsitz nach einem der vorhergehenden Ansprüche, **dadurch gekennzeichnet, dass** der Gleiter (31) in Querrichtung (y) des Fahrzeugsitzes (1) gegen die erste Führung (33) vorgespannt ist.

10. Fahrzeugsitz nach Anspruch 9, **dadurch gekennzeichnet, dass** der Gleiter (31) mittels einer Feder (29) vorgespannt ist, welche an einem Querrohr (17) des Sitzunterbaus (3) abgestützt ist und insbesondere den Lagerbolzen (27) beaufschlagt.

## Claims

1. Vehicle seat, particularly a commercial vehicle seat, comprising a seat base (3) configured as a scissors-type stand, which comprises intersecting rockers (15) and at least one frame (11, 13) which movably guides at least one of the rockers (15) by means of a bearing mechanism (21) in a longitudinal direction (x) of the vehicle seat (1), the bearing mechanism (21) comprising at least one compensation element which bears against a first guide (33) of the frame (11, 13) which is at least partially inclined at an angle (α) relative to the transverse direction (y) of the vehicle seat (1), and is movable along said first guide in the longitudinal direction (x) and at least one rotatably mounted wheel (23), which is supported on a second guide (35) of the frame (11, 13) and may roll along said guide in the longitudinal direction (x), **characterized in that** a slider (31) is provided as a compensation element which is displaceable along the first guide (33).

2. Vehicle seat according to Claim 1, **characterized in that** the second guide (35) in profile is inclined at least partially at the same angle (α) relative to the transverse direction (y) of the vehicle seat (1) as the first guide (33).

3. Vehicle seat according to Claim 2, **characterized in that** the profile of the second guide (35) is an isosceles triangle with the angle (α) as a base angle, in particular with rounded corners.

4. Vehicle seat according to Claim 3, **characterized in that** the apex or imaginary apex of the isosceles triangle faces toward the wheel (23) or away therefrom.

5. Vehicle seat according to one of the preceding claims, **characterized in that** the guides (33, 35) are configured integrally with one another, integrally with the frame (11, 13) or as separate components.

6. Vehicle seat according to one of the preceding claims, **characterized in that** the wheel (23) is configured as a double cone wheel.

7. Vehicle seat according to one of the preceding claims, **characterized in that** the wheel (23) is displaceable in the transverse direction (y) of the vehicle seat (1), in particular on a cross bar (17) of the seat base (3), on which the wheel (23) is rotatably mounted.

8. Vehicle seat according to one of the preceding claims, **characterized in that** the slider (31) is mounted on a bearing pin (27), the bearing pin (27) and/or the slider (31) being displaceable in the transverse direction (y) of the vehicle seat (1).

9. Vehicle seat according to one of the preceding claims, **characterized in that** the slider (31) is pretensioned in the transverse direction (y) of the vehicle seat (1) relative to the first guide (33).

10. Vehicle seat according to Claim 9, **characterized in that** the slider (31) is pretensioned by means of a spring (29), which is supported on a cross bar (17) of the seat base (3) and, in particular, acts on the bearing pin (27).

## Revendications

1. Siège de véhicule, en particulier siège de véhicule utilitaire, comprenant un châssis de siège (3) réalisé sous forme de bâti articulé, lequel châssis de siège comprend des bielles oscillantes croisées (15) et au moins un cadre (11, 13) qui guide au moins l'une des bielles oscillantes (15) de manière mobile dans la direction longitudinale (x) du siège de véhicule (1) au moyen d'un dispositif de palier (21), le dispositif de palier (21) comprenant au moins un élément de compensation qui s'applique contre un premier guide (33) du cadre (11, 13), lequel guide est incliné, au moins par sections, suivant un angle (α) par rapport à la direction transversale (y) du siège de véhicule (1), et qui est mobile dans la direction longitudinale (x) le long de ce guide, et comprenant au moins une roue (23) montée à rotation qui s'appuie contre un deuxième guide (35) du cadre (11, 13) et qui peut rouler le long de ce guide dans la direction longitudinale (x), **caractérisé en ce qu'**un coulisseau (31) est prévu en tant qu'élément de compensation, lequel coulisseau est déplaçable le long du premier guide (33).

2. Siège de véhicule selon la revendication 1, **caractérisé en ce que** le profil du deuxième guide (35) est incliné au moins par sections suivant le même angle (α) par rapport à la direction transversale (y) du siège de véhicule (1) que le premier guide (33).

3. Siège de véhicule selon la revendication 2, **caractérisé en ce que** le profil du deuxième guide (35) est un triangle équilatéral, en particulier doté d'angles arrondis, ayant l'angle (α) comme angle de base.

4. Siège de véhicule selon la revendication 3, **caractérisé en ce que** la pointe ou la pointe imaginaire du triangle équilatéral est orientée en direction de la roue (23) ou à l'écart de celle-ci.

5. Siège de véhicule selon l'une quelconque des revendications précédentes, **caractérisé en ce que** les guides (33, 35) sont réalisés d'un seul tenant l'un avec l'autre, d'un seul tenant avec le cadre (11, 13) ou sous forme de parties structurales séparées.

6. Siège de véhicule selon l'une quelconque des revendications précédentes, **caractérisé en ce que** la roue (23) est réalisée sous forme de roue conique double.

7. Siège de véhicule selon l'une quelconque des revendications précédentes, **caractérisé en ce que** la roue (23) est déplaçable dans la direction transversale (y) du siège de véhicule (1), en particulier sur un tube transversal (17) du châssis de siège (3) sur lequel la roue (23) est montée à rotation.

8. Siège de véhicule selon l'une quelconque des revendications précédentes, **caractérisé en ce que** le coulisseau (31) est monté sur un boulon de palier (27), le boulon de palier (27) et/ou le coulisseau (31) étant déplaçables dans la direction transversale (y) du siège de véhicule (1).

9. Siège de véhicule selon l'une quelconque des revendications précédentes, **caractérisé en ce que** le coulisseau (31) est précontraint contre le premier guide (33) dans la direction transversale (y) du siège de véhicule (1).

10. Siège de véhicule selon la revendication 9, **caractérisé en ce que** le coulisseau (31) est précontraint au moyen d'un ressort (29) qui s'appuie contre un tube transversal (17) du châssis de siège (3) et sollicite en particulier le boulon de palier (27).
